Europäisches Patentamt

European Patent Office

Office européen des brevets

(19)

(11) EP 1 602 913 A1

(12) EUROPEAN PATENT APPLICATION

(43) Date of publication:
07.12.2005 Bulletin 2005/49

(51) Int Cl.⁷: G01N 1/02, E01H 10/00

(21) Application number: 05011655.7

(22) Date of filing: 31.05.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(30) Priority: 01.06.2004 JP 2004162972

(71) Applicant: OMRON CORPORATION
Kyoto-shi, Kyoto 600-8530 (JP)

(72) Inventors:
• Iwata, Hisashi, Japan Highway Public Corporation
Chiyoda-ku Tokyo 100-8979 (JP)

• Yamamoto, Koji, Japan Highway Public Corporation
Chiyoda-ku Tokyo 100-8979 (JP)
• Higashi, Hideo, c/o Omron Corporation
dori Shimogyo-ku Kyotoshi Kyoto 600-8530 (JP)
• Miyazaki, Yoshiyuki, c/o Omron Corporation
dori Shimogyo-ku Kyotoshi Kyoto 600-8530 (JP)

(74) Representative: Käck, Jürgen
Kahler Käck Mollekopf
Vorderer Anger 239
86899 Landsberg/Lech (DE)

(54) **Salt concentration measuring method, salt concentration measuring apparatus, and vehicle on which the apparatus is mounted**

(57) The present invention is directed to enable a salt concentration measuring process to be executed even in the case where a road surface is dry. A salt concentration sensor (2) is mounted in a position on the rear side of a front wheel (104) of a chemical scattering vehicle (100) in a state where a detection surface faces the front wheel (104), and a water spreader (3) is mounted on the front side of the front wheel (104). The salt concentration sensor (2) guides light from an inner light source to the detection surface, makes the light totally reflected by the border between the detection surface and the outside, receives the total reflection light, and generates measurement data indicative of salt concentration in the water adhered to the detection surface. The controller (4) captures the measurement data of the salt concentration sensor (2) while discharging a predetermined amount of water by driving the water spreader (3), and measures salt concentration. Further, the controller (4) determines a scatter amount of an anti-freezing agent on the basis of the measurement value of salt concentration.

Fig. 1

EP 1 602 913 A1

**Description**

BACKGROUIND OF THE INVENTION

Technical Field

The present invention relates to a technique of measuring concentration of residual salt on the surface of a road by a vehicle traveling on the road.

Background Art

In winter, an anti-freezing agent is scattered on roads in cold districts. Since the main material of the anti-freezing agent is sodium chloride or calcium chloride, it is desirable to scatter the anti-freezing agent of the minimum amount necessary to assure safety of travel of vehicles so that load on the peripheral environment becomes light. In order to regulate the scatter amount, first, the concentration of salt remaining on the road surface has to be accurately grasped.

In view of the above point, the applicant of the invention has developed a salt concentration sensor capable of measuring salt concentration on a road surface with high precision. The salt concentration sensor is disclosed as "water detecting apparatus" in the following Japanese Unexamined Patent Publication No. 2000-155096.

The salt concentration sensor described in the Japanese Unexamined Patent Publication No. 2000-155096 has a light transmitting member having a detection surface, a light source for generating diffusion light which enters the light transmitting member, and a detector for receiving light totally reflected by the border between the detection surface of the light transmitting member and the outside and generating an image including an image of the total reflection light. The image data generated by the detector is input to a computer where the border position between a light area corresponding to the total reflection light and a dark area corresponding to the critical angle is detected. When a water droplet containing salt is adhered to the detection surface, the magnitude of the critical angle changes according to the refractive index of the water droplet, so that the border position between the light area and the dark area also fluctuates.

In the computer, a table indicative of the relation between the border position detected from an image and concentration is preliminarily set on the basis of the principle. At the time of measurement, the salt concentration on the road surface is obtained with reference to the table on the basis of the border position detected from the image.

The Japanese Unexamined Patent Publication No. 2000-155096 also describes an example of using the salt concentration sensor with the above-descried configuration which is mounted in a predetermined position in a vehicle (refer to Fig. 15 and column [0037] of the Japanese Unexamined Patent Publication No. 2000-155096).

There is another vehicle-mounted salt concentration sensor which is disclosed in the following Japanese Unexamined Patent Publication No. H11-14515. The salt concentration sensor of the Japanese Unexamined Patent Publication No. H11-14515 is constructed so as to receive a water droplet splashed by a tire of a vehicle by a water hit plate, guide the water droplet to a water vessel, and measure salt concentration of the water accumulated.

DISCLOSURE OF THE INVENTION

The salt concentration sensor as described in the Japanese Unexamined Patent Publication No. 2000-155096 and Japanese Unexamined Patent Publication No. H11-14515 can measure salt concentration with high precision when there is water on a road surface. However, there is a problem such that the salt concentration sensor cannot be used when the road surface is dry.

The present invention has been achieved by paying attention to the problem and an object of the invention is to enable a salt concentration measuring process to be executed even in the case where a road surface is dry.

A first salt concentration measuring method according to the invention is for measuring concentration of residual salt on a road surface by using a salt concentration sensor constructed so as to measure concentration of salt in water. In the method, at least one salt concentration sensor is mounted in a body part of a vehicle traveling on a road to be measured, and concentration of residual salt on the road surface is measured by using measurement data of the salt concentration sensor obtained when the vehicle passes the measurement position.

In the method, as the salt concentration sensor (hereinbelow, also simply called "sensor"), a sensor having a configuration similar to that disclosed in the Japanese Unexamined Patent Publication No. 2000-155096 can be used. The salt concentration sensor has a light transmitting member such as a prism, a light source, and a light receiver and can generate an image including a light area corresponding to total reflection light and a dark area corresponding to the critical angle.

The salt concentration sensor can output the image data as measurement data indicative of salt concentration in water. By enabling the border position between the dark and light areas to be measured in the sensor, coordinates indicative of the border can be output as measurement data. Further, the salt concentration can be also measured in the sensor on the basis of the border position and output as measurement data.

The salt concentration sensor is not limited to the above-described one but, as disclosed in the Japanese Unexamined Patent Publication No. H11-14515, a sensor of a type of accumulating a predetermined amount of water droplets and conducting measurement can be also used. In place of the sensor of the type of accumulating water droplets, a salt concentration sensor of an electric wave type (having a configuration of irradiating a road surface with an electric wave, receiving reflection wave from the road surface, and measuring salt concentration by using reflectance or an attenuation factor of the reflection wave with respect to the irradiated wave) can be also used.

According to the method, a predetermined amount of water is added to a measurement position before a vehicle on which the sensor is mounted passes the measurement position. Consequently, even in the case where the road surface of the measurement position is dry, the road surface at the time point the vehicle arrives at the measurement position is wet and measurement of the residual salt concentration by the sensor can be conducted without any problem. The measurement position can be set in an arbitrary position on a road. If there is an amount of water sufficient to measure salt concentration in the position, a water supply timing may not be limited.

For example, a water spreader is mounted on the side of the measurement position. By driving the water spreader at the time point a vehicle on which the salt concentration sensor is mounted arrives near the measurement position, a predetermined amount of water can be spread in the measurement position. The water spreader has a water tank, a nozzle, a hose, and the like, and can discharge a predetermined amount of water by opening the valve of the nozzle in accordance with a signal from a wireless control from the vehicle or a sensor for detecting a vehicle (such as a device for reading the number plate of a vehicle).

In a second salt concentration measuring method according to the invention, a salt concentration sensor constructed so as to capture a predetermined amount of a water droplet and measure concentration of salt in the water droplet is used. In the method, the salt concentration sensor is mounted in a body part on the rear side of at least one of wheels of a vehicle traveling on a road to be measured so that a part for capturing the water droplet faces the wheel. Before the wheel toward which the salt concentration sensor faces passes a predetermined measurement position on the road, a predetermined amount of water is supplied to the measurement position, and concentration of residual salt on the road is measured by using measurement data of the salt concentration sensor obtained when the wheel passes the measurement position.

In the second method, a sensor of the type disclosed in the Japanese Unexamined Patent Publication No. 2000-155096 and Japanese Unexamined Patent Publication No. H11-14515, that is, a sensor capable of capturing a water droplet splashed by the wheel and measuring salt concentration in water can be used.

Since the sensor is disposed in a body part on the rear side of a predetermined wheel of a vehicle so that the detection surface faces the wheel, in the case where a certain amount of water exists on the road surface on which the vehicle is traveling, a water droplet splashed by the wheel reaches the water droplet capturing part of the salt concentration sensor, and the salt concentration of the water droplet can be measured. At the time of mounting the sensor, desirably, the front face of the capturing part is inclined so that the upper side of the detection surface is positioned close to the wheel. This is because the possibility that a water droplet splashed by the wheel flies obliquely upward. Also in the second method, water can be supplied to the measurement position in a manner similar to the first method.

In a preferred mode of the second method, a water spreader capable of discharging a predetermined amount of water is mounted in a predetermined position in the vehicle in a state where a water discharge port lies in front of the wheel toward which the salt concentration sensor faces, measurement data of the salt concentration sensor is captured while discharging water from the water spreader, and residual salt concentration measuring process is executed. In this case, the water spreader is operated when the vehicle reaches a predetermined position. When measurement data from the sensor immediately after the operation displays predetermined salt concentration, or when the existence of water containing no salt is indicated, the salt concentration can be measured on the basis of the measurement data. The water spreader can be attached in the vehicle body part in front of the wheel toward which the salt concentration sensor faces. The invention is not limited to the arrangement. It is also possible to dispose a body part such as a tank in an arbitrary place in the vehicle body and extend a nozzle from the place to the front side of the wheel.

In the above-described mode, the measurement position can be freely determined and salt concentration in a plurality of positions on a road can be also measured.

In the case of carrying out the mode, it is desirable to measure travel speed of the vehicle and adjust a discharge amount of water from the water spreader in accordance with the measured speed. In order to splash a water droplet to the water droplet capturing part, a predetermined amount or more of water has to be supplied to the wheel. When a discharge amount per predetermined time is fixed, as the travel speed of the vehicle increases, the water supply amount for the wheel decreases, and there is the possibility that water sufficient to splash a water droplet cannot be assured. Therefore, preliminarily, travel speed is classified in plural levels, a desired water discharge amount is computed at each of the levels, and a table in which the relations between speeds and the water discharge amounts are stored is formed. At the time of measurement, water of the amount according to the travel speed can be discharged to make water splash to the capturing part, so that measurement by the sensor can be performed stably. The travel speed can be measured by using, for example, a speed sensor mounted on the vehicle.

The travel speed measurement value can be used to show the measurement result of the sensor in a more obvious form. For example, based on travel speed, length of time of water discharge, a discharge amount, and the like, the area of the range in which water is supplied is obtained. From the salt concentration measured by the salt concentration sensor, a salt amount per unit area (for example, unit of $g/m^2$) can be derived. Since scattering of an anti-freezing agent is controlled by the scatter amount per unit area under present circumstances, by the above-described manner, a residual salt amount can be expressed in the same unit as that of the scatter amount of the anti-freezing agent. A necessary scatter amount can be easily derived.

Modes common to the first and second methods will now be described. First, in a first preferred mode, temperature of a road surface is measured before supply of the water. When the measured temperature is higher than a predetermined value (a temperature at which water may freeze, for example, 0 to 2°C), a predetermined amount of water is supplied to the measurement position. When the measured temperature is lower than the predetermined value, a predetermined amount of salt water is supplied to the measurement position. When the salt water is supplied, salt concentration indicated by the measurement data of the salt concentration sensor is compared with concentration of the supplied salt water, thereby determining the presence or absence of residual salt in the measurement position.

In this mode, when there is the possibility that supplied water freezes, salt water is supplied, so that freezing can be prevented. In the case where salt water is supplied, when the salt concentration indicated by the measurement data of the salt concentration sensor is higher than that of the supplied salt water, it can be determined that salt remains on the road surface. When the salt concentration indicated by the measurement data is higher than the salt concentration supplied, by subtracting the latter from the former, concentration of remaining salt can be extracted.

The temperature of a road surface can be measured by a road temperature meter. Preferably, the road temperature meter is also mounted on a vehicle.

In another preferred mode, water on a road surface is detected before supply of the water and, when water exceeding a predetermined amount is detected, concentration of residual salt is measured without supplying water. In the case of using the salt concentration sensor of the type of using a water droplet splashed by a wheel, the sensor can be used as water detecting means. Specifically, in the case where measurement data of the salt concentration sensor corresponds to pure water or an aqueous solution having predetermined salt concentration when no water is supplied, it can be determined that water sufficient for measurement exists on the road surface. In this case, salt concentration can be immediately measured by using the measurement data used for the determination.

In the above-described mode, water on the road surface can be detected by using means other than the salt concentration sensor. For example, a road surface determining apparatus disclosed in the Japanese Patent Publication No. 2, 697, 307 can determine a plurality of kinds of road surface states of different water amounts including a road surface which is slightly wet and a road surface having thereon a puddle. Alternately, a water sensor using infrared or the like can be also used.

The present invention also provides, as a vehicle-mount-type salt concentration measuring apparatus, a salt concentration measuring apparatus including: a salt concentration sensor constructed for concentration of salt in water; a water spreader capable of discharging a predetermined amount of water; and a controller for executing a measuring process using measurement data of the salt concentration sensor while controlling a water spreading operation of the water spreader. In the apparatus, the salt concentration sensor is mounted in a predetermined position in a body part of a vehicle, and the water spreader is mounted in a body part on the front side of the salt concentration sensor. The controller is mounted in a predetermined position in the vehicle, drives the water spreader to discharge water at a predetermined timing, captures measurement data of the salt concentration sensor, and executes a salt measuring process. By the salt concentration measuring apparatus with the configuration, the first salt concentration measuring method can be executed.

Further, the invention provides, as a salt concentration measuring apparatus used for the case of executing the second salt concentration measuring method, a salt concentration measuring apparatus including: a salt concentration sensor constructed so as to capture a predetermined amount of a water droplet and generate measurement data indicative of concentration of salt in the captured water droplet; a water spreader capable of discharging a predetermined amount of water; and a controller for executing a measuring process using measurement data of the salt concentration sensor while controlling a water spreading operation of the water spreader. In the apparatus, the salt concentration sensor is mounted in a body part on the rear side of a predetermined wheel of a vehicle in a state where the water droplet capturing part faces the wheel. The water spreader is mounted in a predetermined position in the vehicle in a state where a water discharge port is positioned on the front side of the wheel toward which the salt concentration sensor faces. The controller is mounted in a predetermined position in the vehicle, drives the water spreader at a predetermined timing to discharge water, captures measurement data of the salt concentration sensor, and executes salt measuring process.

In the above, the salt concentration sensor and the water spreader can be mounted on the front and rear sides of a predetermined wheel. The mounting position of the water spreader is not limited to the above-described position. It is also possible to mount the body in an arbitrary position and extend a nozzle from the position to a position in front of the wheel. The invention is not limited to one set of the salt concentration sensor and the water spreader. The set can be provided for each of a plurality of wheels. When the nozzle of the water spreader is branched to supply water to a plurality of wheels, also in the case where a plurality of salt concentration sensors are attached, a single water spreader is sufficient.

The controller can be constructed by a computer in which a program (including electronic data constructing a table for match) for deriving salt concentration from measurement data of the salt concentration sensor is set. The controller can capture measurement data of the sensor after lapse of predetermined time since the water spreader drives, and perform measuring process. The timing of capturing measurement data from the sensor is not strictly determined. It is also possible to start capturing measurement data upon driving of the water spreader and, when measurement data indicative of existence of a water droplet containing salt or a water droplet containing no salt is obtained, perform the salt concentration measuring process. Alternately, the measuring process may be performed a plurality of times before lapse of predetermined time since the water spreader was driven.

The salt concentration measuring apparatus can use, as a salt concentration sensor, a sensor constructed to guide light from an internal light source to a detection surface, make the light totally reflected by a border between the detection surface and the outside, receive the totally reflected light, and generate measurement data indicative of concentration of salt in water adhered to the detection surface. Further, for the salt concentration measuring apparatus, various modes described in the salt concentration measuring method can be employed.

The present invention can also provide a vehicle on which the salt concentration measuring apparatus having any of the configurations is mounted. For the vehicle, a function of measuring salt concentration in a plurality of positions on a road, generating data in which the measurement results are associated with the measurement positions, and transmitting the data by radio or the like can be set.

On the vehicle, a scattering apparatus for scattering an anti-freezing agent on a road on which the vehicle is traveling, and a scatter controller for determining a scatter amount of the anti-freezing agent on the basis of a measurement result of the salt concentration measuring apparatus and, on the basis of the determination, controlling operation of the scattering apparatus can be mounted. Such a vehicle can measure salt concentration on a road and scatter an anti-freezing agent of a proper amount according to the salt concentration.

In the vehicle, the controller of the salt concentration measuring apparatus can be provided with the function of the scatter controller. Alternately, the controller is provided with the function of determining the scatter amount of the anti-freezing agent, and an apparatus having the function of controlling operation of the scattering apparatus on the basis of the determined scatter amount may be separately mounted. In this case, the scatter controller is constructed by two apparatuses of the controller and the apparatus for controlling operation of the scattering apparatus.

According to the invention, even in the case where the road surface is dry, the salt concentration can be measured while the vehicle travels on a road to be measured. Since it is sufficient to supply the minimum amount of water necessary to splash a water droplet to the rearward sensor to the wheel, inconveniences such as formation of a puddle on a road are suppressed. Moreover, the salt concentration in an arbitrary position can be measured. Therefore, serviceability in measurement of the salt concentration on a road as an index for determining the scatter amount of an anti-freezing agent can be largely improved.

BRIEF DESCRIPTION OF THE DRAWINGS

Fig. 1 shows an explanatory diagram of an example where a salt concentration measuring apparatus is mounted on an anti-freezing agent scattering vehicle.
Fig. 2 shows an explanatory diagram of the configuration of an optical system of a salt concentration sensor.
Fig. 3 shows an explanatory diagram of the principle of measurement in the salt concentration sensor.
Fig. 4 shows an explanatory diagram of an example of image data.
Fig. 5 shows a table of the relation between density of salt water and refractive index.
Fig. 6 shows a block diagram of a salt concentration measuring apparatus.
Fig. 7 shows a flowchart of the procedure of measuring process.
Fig. 8 shows an explanatory diagram of an example of mounting the salt concentration measuring apparatus on a car.

DESCRIPTION OF THE PREFERRED EMBODIMENTS

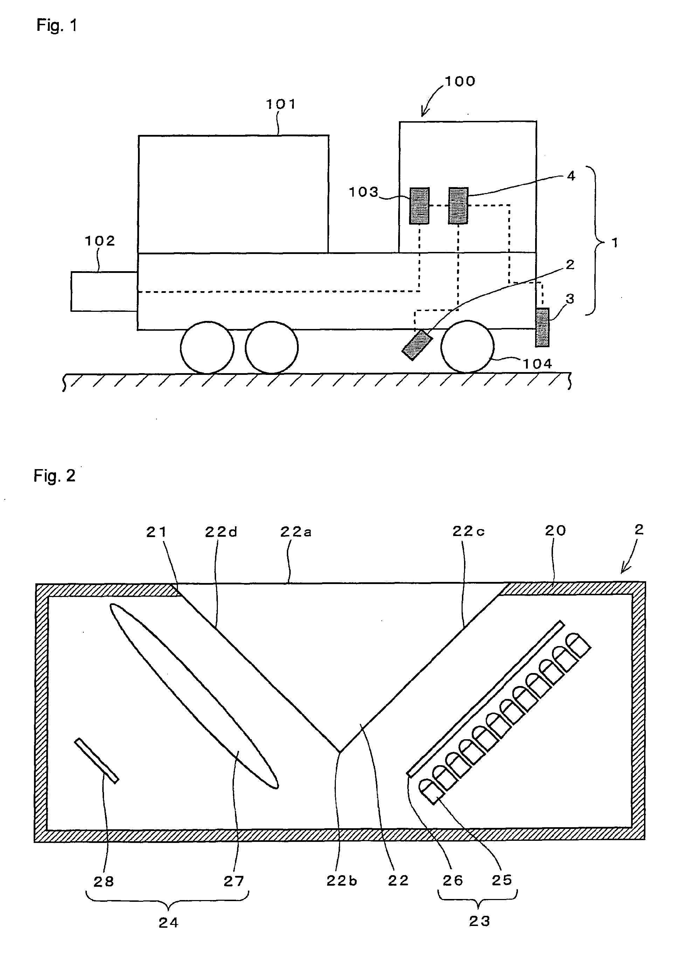

Fig. 1 shows the configuration of an anti-freezing agent scattering vehicle 100 on which a salt concentration measuring apparatus according to the invention is mounted. The anti-freezing agent scattering vehicle 100 has, in its rear part, an agent tank 101 filled with an anti-freezing agent and a scattering device 102 for receiving the anti-freezing agent from the agent tank 101 and scattering it. Hereinbelow, the anti-freezing agent scattering vehicle 100 will be called "vehicle 100".

Main components of a salt concentration measuring apparatus 1 of the embodiment are a salt concentration sensor 2, a water spreader 3, and a controller 4 connected to the salt concentration sensor 2 and the water spreader 3. The controller 4 is set in such a manner that a program for measuring salt concentration, various tables, and the like are assembled in an ECU (Electronic Control Unit) of the vehicle 100. The controller 4 is provided together with a computer 103 for controlling the scattering device 102 (hereinbelow, called "scatter controller 103") in a proper place in a vehicle body.

The salt concentration sensor 2 is mounted in a rear position of a front wheel 104 on one side of the vehicle so that the detection surface faces the front wheel 104. The salt concentration sensor 2 of the embodiment is mounted obliquely in a state where the upper side of the detection surface is close to the front wheel 104 so that a water droplet splashed by the front wheel 104 is easily attached to the detection surface.

On the other hand, the water spreader 3 is attached to the front surface of the body of the vehicle 100. The water spreader 3 includes tanks filled with two kinds of water and salt water, a nozzle receiving the water from one of the tanks and scattering the water onto a road surface, and a valve for opening/closing a connection port between the nozzle and the tanks (those components are not shown in the diagram). The water spreader 3 is attached in a state where the nozzle lies in a center line of the peripheral surface of the front wheel 104. Therefore, the water or salt water spread from the nozzle flows rearward from the front side of the front wheel 104 and a water splash to the rear side by the front wheel 104 easily occurs.

In the above, the controller 4 obtains measurement data of the salt concentration sensor 2 while controlling the water spreading operation of the water spreader 3 and measures salt concentration on the road on which the vehicle is traveling. The controller 4 is electrically connected to the scatter controller 103, determines the scatter amount of the anti-freezing agent in accordance with the measured salt concentration, and outputs the scatter amount to the scatter controller 103. Since the scatter controller 103 drives the scattering device on the basis of the scatter amount given from the controller 4, the anti-freezing agent of the minimum amount necessary to assure safe traveling of the vehicle can be scattered.

Fig. 2 shows the configuration of the salt concentration sensor 2. The salt concentration sensor 2 includes, in a casing 20 having an opening 21 in a front face (which is shown as a tdp face in the diagram), a rectangular prism 22 (hereinbelow, simply called "prism 22"), a light projector 23, and a light receiver 24. The prism 22 is fixed in a state where a base surface 22a is fit in the opening 21 of the casing 20. The base surface 22a functions as the above-described detection face.

The light projector 23 is disposed so as to face a predetermined surface 22c of the prism 22 in the casing 20. The light projector 23 is constructed by a plurality of LEDs 25 arranged along a direction extended from a right angle part 22b of the prism 22 toward the detection surface 22a, and a diffuser 26 disposed between the LEDs 25 and the prism 22. The light receiver 24 is constructed by a lens 27 and a CCD 28, and is disposed in a position so as to face an outgoing surface 22d of the total reflection light of the light from the light projector 23. The LEDs 25 and the CCD 28 are electrically connected to a wiring board (not shown) disposed at the inner bottom of the casing 20.

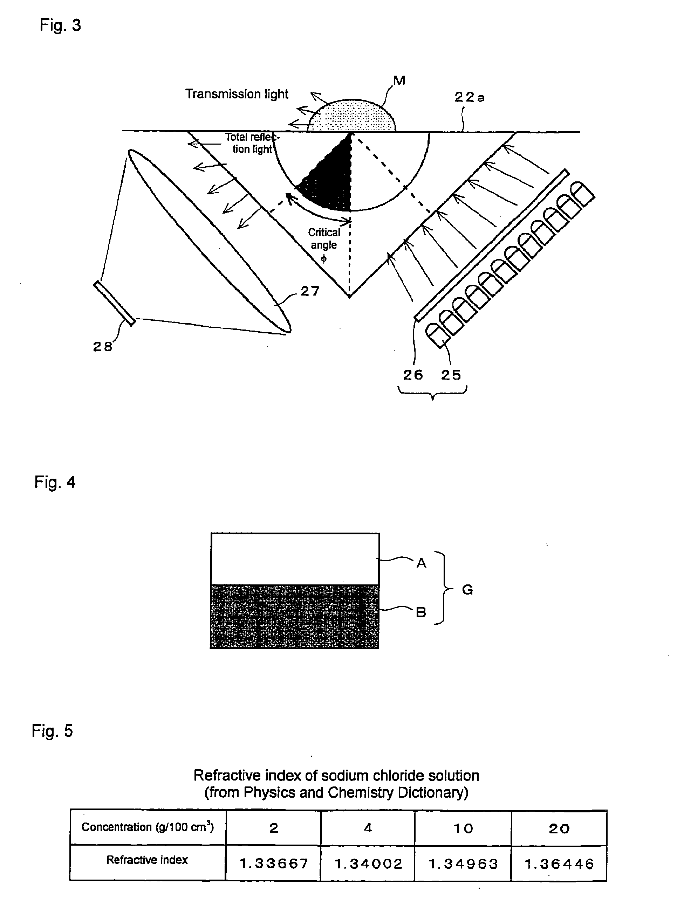

The salt concentration sensor 2 generates measurement data indicative of salt concentration of the water adhered to the detection surface 22a by driving the light projector 23 and the light receiver 24 and outputs the measurement data to the controller 4. The principle of measurement by the salt concentration sensor 2 will be briefly described hereinbelow with reference to Figs. 3 to 5.

Fig. 3 shows the relation between incident light and total reflection light in the prism. When light from the light projector 23 entering the prism 22 reaches the detection surface 22a, part of the light is totally reflected by the border between the detection surface 22a and the outside. The total reflection light is incident on the CCD 28 via the lens 27. In the CCD 28, as shown in Fig. 4, an image G including a light area A by the incidence of the total reflection light and a dark area B reflecting the magnitude of the critical angle is generated.

When the refractive index of the prism 22 is n1 and that of the outside is n2, a critical angle $\phi$ at which total reflection occurs is obtained by the following equation (1).

$$\phi = Sin^{-1} \frac{n2}{n1} \qquad (1)$$

According to Equation (1), when a water droplet M is adhered to the detection surface 22a and the refractive index n2 changes, the magnitude of the critical angle $\phi$ also changes. According to the change, the border position between the light area A and the dark area B on the image G also changes.

Fig. 5 shows excerpts of data regarding the refractive index of a sodium chloride solution from a physics and chemistry dictionary. As shown, the refractive index of the sodium chloride solution increases as the salt concentration increases. Consequently, the border position between the light and dark areas on the image G changes according to the salt concentration of the water droplet M adhered to the detection surface 22a.

The salt concentration sensor 2 outputs, as measurement data, data of the image G including the light area A and the dark area B. In the embodiment, for the optical system shown in Fig. 3, a conversion table is generated in which the coordinates of the border position between the light and dark areas on the image G and the salt concentration of the salt water correspond to each other on the basis of the critical angle $\phi$ preliminarily obtained from the theoretical refractive index of the salt water. The conversion table is stored in the memory of the controller 4. The controller 4 at the time of measurement detects the coordinates of the border position between the light and dark areas from the image G obtained from the salt concentration sensor 2, and specifies the salt concentration from the conversion table on the basis of the detected coordinates.

In the conversion table, the border position in the case where no water droplet is adhered to the detection surface (the border position corresponding to the critical angle $\phi$ at the time the refractive index n2 in Equation (1) is only the refractive index of air) is also stored. The border position is used at the time of performing a water presence/absence determining process which will be described later.

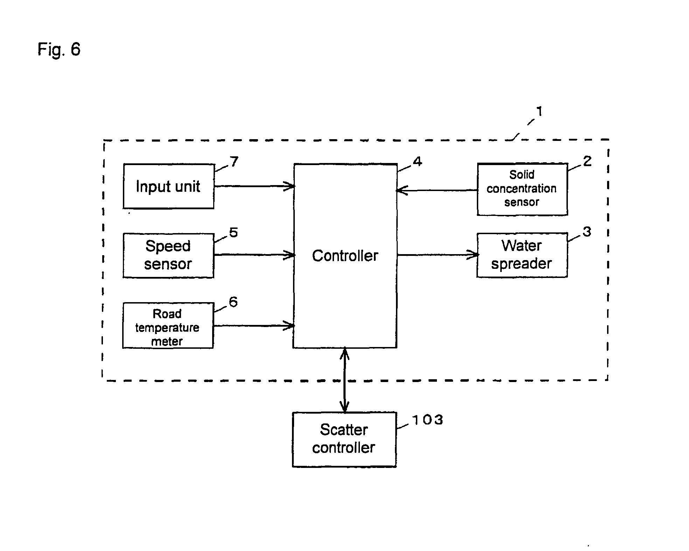

Fig. 6 shows an electric configuration of the salt concentration measuring apparatus 1 in the vehicle 100 in Fig. 1.

The salt concentration measuring apparatus 1 of the example has the salt concentration sensor 2, water spreader 3, controller 4 and, in addition, a speed sensor 5, a road temperature meter 6, and an input unit 7. The speed sensor 5 is attached to a position near a predetermined wheel of the vehicle 100, and outputs data indicative of the rotational speed of the wheel. The road temperature meter 6 measures the temperature of the road surface by infrared ray in a non-contact manner and is attached to the front face of the vehicle 100 like the water spreader 3. The speed sensor 5 is used to control a water spreading amount of the water spreader 3, and the road temperature meter 6 is used to determine which one of water and salt water is to be spread. The input unit 7 is used to instruct the controller 4 to start/finish the measuring process or the like and is provided in a position near the driver's seat in the vehicle 100.

The controller 4 of the embodiment is programmed so as to spread salt water in the case where the road temperature is 2°C or less. In the memory of the controller 4, not only the salt concentration conversion table but also a table for adjusting the spread amount of the water spreader 3 and a table for adjusting the scatter amount of the anti-freezing agent are stored. In the table for adjusting the water spread amount, the water spread amount is associated with each speed of the vehicle. The table is generated by obtaining a water amount necessary for the front wheel 104 to splash a water droplet by experiments and computing a water spread amount necessary to supply the water amount to the front wheel 104 at each of plural travel speeds. It is set, as a rule, that the higher the travel speed of the vehicle becomes, the larger the water spread amount becomes. However, the relation between the vehicle travel speed and the water spread amount is not always proportional. It can be considered that as the speed increases, the more the water splash occurs. The table is set by replacing the water spread amount with the degree of opening of the valve of the water spreader 3.

In the table for adjusting the scatter amount of the anti-freezing agent, an insufficient amount of salt concentration measured with respect to salt concentration necessary for safe travel of the vehicle (hereinbelow, called "reference salt concentration") and the scatter amount of the anti-freezing agent are associated with each other. The scatter amount is calculated, for example, on the basis of the amount of the anti-freezing agent necessary to increase the salt concentration per unit area only by a predetermined degree (for example, 0.1%).

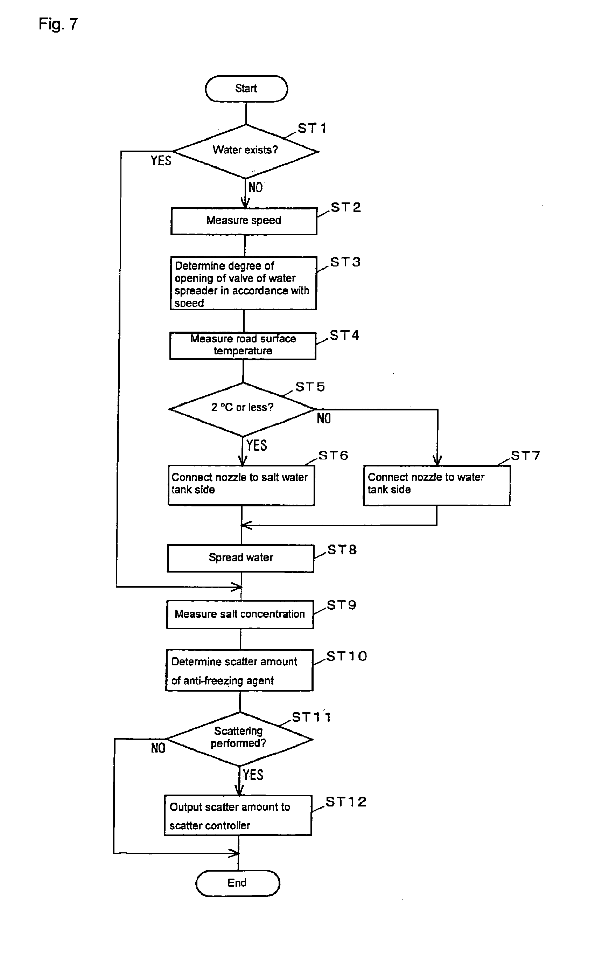

The procedure of processes in the controller 4 will be described in detail hereinbelow with reference to Fig. 7. In Fig. 7 and the following description, step of each process is abbreviated as "ST".

The procedure of Fig. 7 starts in response to a measurement start operation of the driver after a vehicle starts driving. First in ST1, whether water exists on the road surface or not is determined by using measurement data of the salt concentration sensor 2. When the border position between dark and light areas on the image G captured from the salt concentration sensor 2 corresponds to the value of the case where no water droplet is adhered to the detection surface 22a, "NO" is determined in ST1. In this case, the controller 4 advances to the following ST2 where the present travel speed of the vehicle is measured by using measurement data of the speed sensor 5.

In ST3, based on the travel speed measured in ST2, the degree of opening of the valve of the water spreader 3 is determined. In ST4, the temperature of the road surface is measured by using the road temperature meter 6. When the road temperature measured is 2°C or less, the controller 4 advances from ST5 to ST6 where the nozzle of the water spreader 3 is connected to the salt water tank side. On the other hand, when the measured road temperature is higher than 2°C, the controller 4 advances from ST5 to ST7 where the nozzle is connected to the water tank side.

After the nozzle connecting process is finished, in ST8, the valve of the water spreader 3 is opened at the degree of opening according to the determination in ST3 to spread water or salt water. In ST9, the measurement data of the salt concentration sensor 2 is captured and, on the basis of the principle, salt concentration is measured. In ST9, measurement data of the salt concentration sensor 2 is repeatedly obtained until the measurement data of the salt concentration sensor 2 exhibits the existence of water. The water spreading process by the water spreader is continued until the measurement is finished.

In the case where salt water is spread in ST8, in ST9, a value obtained by subtracting the salt concentration of the salt water from the measured salt concentration is used as a result of the measurement.

When it is determined in the first ST1 that "water exists", the controller 4 skips ST2 to ST8 and advances to ST9. Consequently, when water exists on the road surface, without operating the water spreader 3, the salt concentration measuring process is executed by using the water on the road surface.

After completion of the salt concentration measuring process in ST9, in ST10, the measured salt concentration is compared with the reference concentration. When the measurement value is insufficient with respect to the reference concentration, the scatter amount of the anti-freezing agent is obtained by referring to the table on the basis of the insufficient amount.

When the scatter amount determined in ST10 is larger than 0, "YES" is determined in ST11 and the controller 4 advances to ST12 where the determined scatter amount is output to the scatter controller 103. After that, the process is finished.

Although the scatter amount of the anti-freezing agent is determined by single measurement in the above-described procedure, in operation, it is desired to determine the scatter amount by performing measurement a plurality of times in an area where the anti-freezing agent is to be scattered and averaging the measurement results. In this case, if it is set to repeatedly execute the procedure of ST1 to ST9, on removal of the water droplet adhered to the salt concentration sensor 2 by the preceding measurement by gravity, wind pressure, or the like, the next measurement can be conducted.

The salt concentration sensor 2 may be provided with a wiper or a heater to prevent a water droplet adhered to the detection surface from freezing. To perform the water detecting process in ST1, the road surface determining sensor in the above-described Japanese Patent Publication No. 2,697,307 may be employed.

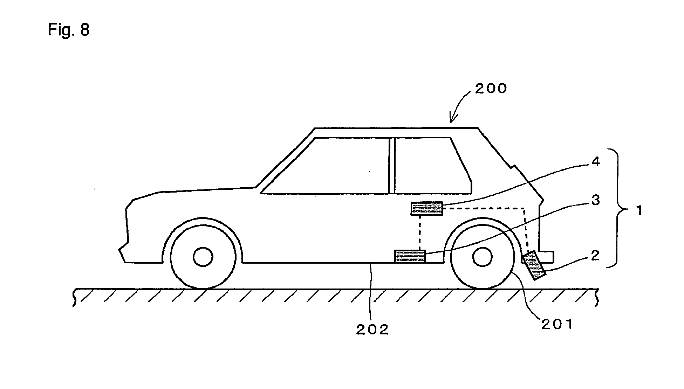

Although the example of mounting the salt concentration measuring apparatus 1 on the anti-freezing agent scattering vehicle has been described above, the salt concentration measuring apparatus 1 may be also attached to a common car. Fig. 8 shows a configuration example of the vehicle in this case. The salt concentration sensor 2 in this case is mounted obliquely in a state where the upper side of the detection surface is close to a rear wheel 201 on the rear side of the rear wheel 201 of a vehicle 200. The water spreader 3 is attached to a vehicle bottom 202. In the controller 4, functions similar to those of the embodiment of Fig. 1 are set.

The vehicle 200 with the configuration can function as a patrol car for measuring salt concentration in an arbitrary position while traveling on a road. Further, for the controller 4 in the vehicle 200, a position measuring function by a GPS, and a function of transmitting the position of the vehicle measured by the position measuring function together with the measurement result of salt concentration can be set. When the vehicle 200 is allowed to perform the measuring process while traveling in a wide range, positions requiring scatter of an anti-freezing agent and a scatter amount can be grasped in detail and a plan for scattering can be made.

**Claims**

1. A salt concentration measuring method of measuring concentration of residual salt on a road surface by using a salt concentration sensor (2) constructed so as to measure concentration of salt in water,

   **characterized in that** at least one salt concentration sensor (2) is mounted in a body part of a vehicle traveling on a road to be measured, before the vehicle passes a predetermined measurement position on the road, a predetermined amount of water is supplied to the measurement position, and concentration of residual salt on said road is measured by using measurement data of the salt concentration sensor (2) obtained when said vehicle passes the measurement position.

2. A salt concentration measuring method of measuring concentration of residual salt on a road surface by using a salt concentration sensor (2) constructed so as to capture a predetermined amount of a water droplet and measure concentration of salt in the water droplet,

   **characterized in that** said salt concentration sensor (2) is mounted in a body part on the rear side of at least one of wheels of a vehicle traveling on a road to be measured so that a part for capturing said water droplet faces said wheel,

   before the wheel toward which said salt concentration sensor (2) faces passes a predetermined measurement position on the road, a predetermined amount of water is supplied to the measurement position, and concentration of residual salt on said road is measured by using measurement data of the salt concentration sensor (2) obtained when said wheel passes the measurement position.

3. The salt concentration measuring method according to claim 2, wherein a water spreader (3) capable of discharging a predetermined amount of water is mounted in a predetermined position in said vehicle in a state where a water discharge port lies in front of the wheel toward which said salt concentration sensor (2) faces, measurement data of said salt concentration sensor (2) is captured while discharging water from the water spreader (3), and residual salt concentration measuring process is executed.

**4.** The salt concentration measuring method according to claim 3, wherein travel speed of said vehicle is measured, and a discharge amount of water from said water spreader (3) is adjusted in accordance with the measured speed.

**5.** The salt concentration measuring method according to claim 1 or 2, wherein temperature of a road surface is measured before supply of said water, when the measured temperature is higher than a predetermined value, a predetermined amount of water is supplied to said measurement position, when said measured temperature is lower than said predetermined value, a predetermined amount of salt water is supplied to said measurement position and, when the salt water is supplied, salt concentration indicated by the measurement data of said salt concentration sensor (2) is compared with concentration of the supplied salt water, thereby determining the presence or absence of residual salt in said measurement position.

**6.** The salt concentration measuring method according to claim 1 or 2, wherein water on a road surface is detected before supply of said water and, when water exceeding a predetermined amount is detected, concentration of residual salt is measured without supplying water.

**7.** A salt concentration measuring apparatus (1) comprising:

a salt concentration sensor (2) constructed so as to measure concentration of salt in water;
a water spreader (3) capable of discharging a predetermined amount of water; and
a controller (4) for executing a measuring process using measurement data of the salt concentration sensor (2) while controlling a water spreading operation of said water spreader (3),

wherein said salt concentration sensor (2) is mounted in a predetermined position in a body part of a vehicle, said water spreader (3) is mounted in a body part on the front side of said salt concentration sensor (2),
said controller (4) is mounted in a predetermined position in said vehicle, drives the water spreader (3) to discharge water at a predetermined timing, captures measurement data of the salt concentration sensor (2), and executes a salt measuring process, thereby measuring concentration of residual salt on a road surface on which said vehicle travels.

**8.** A salt concentration measuring apparatus (1) comprising:

a salt concentration sensor (2) constructed so as to capture a predetermined amount of a water droplet and generate measurement data indicative of concentration of salt in the captured water droplet;
a water spreader (3) capable of discharging a predetermined amount of water; and
a controller (4) for executing a measuring process using measurement data of the salt concentration sensor (2) while controlling a water spreading operation of said water spreader (3),

wherein said salt concentration sensor (2) is mounted in a body part on the rear side of a predetermined wheel of a vehicle in a state where a water droplet capturing part faces said wheel,
said water spreader (3) is mounted in a predetermined position in said vehicle in a state where a water discharge port is positioned on the front side of the wheel toward which said salt concentration sensor (2) faces, and
said controller (4) is mounted in a predetermined position in said vehicle, drives the water spreader (3) at a predetermined timing to discharge water, captures measurement data of the salt concentration sensor (2), and executes salt measuring process, thereby measuring concentration of residual salt on a road surface on which said vehicle travels.

**9.** A salt concentration measuring apparatus (1) comprising:

a salt concentration sensor (2) constructed to guide light from an internal light source to a detection surface (22a), make the light totally reflected by a border between the detection surface (22a) and the outside, receive the totally reflected light, and generate measurement data indicative of concentration of salt in water adhered to said detection surface (22a);
a water spreader (3) capable of discharging a predetermined amount of water; and
a controller (4) for executing measuring process using measurement data of the salt concentration sensor (2) while controlling water spreading operation of said water spreader (3),

wherein said salt concentration sensor (2) is attached in a body part on the rear side of a predetermined wheel in a vehicle in a state where said detection surface (22a) faces said wheel,
said water spreader (3) is disposed in a predetermined position in said vehicle in a state where a water discharge port is positioned in front of the wheel toward which said salt concentration sensor (2) faces, and
said controller (4) is mounted in a predetermined position in said vehicle, drives the water spreader (3) at a predetermined timing to discharge water, captures measurement data of the salt concentration sensor (2), and executes salt measuring process, thereby measuring concentration of residual salt on a road surface on which said vehicle travels.

**10.** A salt concentration measuring apparatus (1) according to any one of claims 7 to 9, further comprising speed measuring means (6) for measuring travel speed of said vehicle,

wherein said controller (4) adjusts a water discharge amount of said water spreader (3) in accordance with travel speed measured by said speed measuring means (6).

**11.** A salt concentration measuring apparatus (1) according to any one of claims 7 to 10, further comprising temperature measuring means (6) for measuring temperature of a road surface,

wherein said water spreader (3) can spread either water or salt water while switching between the water and the salt water, and

said controller (4) controls water spreading operation of said water spreader (3) in such a manner that when the temperature measured by said temperature measuring means (6) is higher than a predetermined value, a predetermined amount of water is discharged and, when said measured temperature is lower than said predetermined value, a predetermined amount of salt water is discharged and, when said water spreader (3) is controlled to discharge salt water, determines a value obtained by subtracting the concentration of the discharged salt water from salt concentration indicated by the measurement data of said salt concentration sensor (2) as a measurement result of said salt concentration.

**12.** A salt concentration measuring apparatus (1) according to any one of claims 7 to 11, further comprising water detecting means for detecting water on a road surface,

wherein when water exceeding a predetermined amount is detected by said water detecting means, said controller (4) executes salt concentration measuring process without driving said water spreader (3).

**13.** A vehicle (100) on which the salt concentration measuring apparatus (1) according to any one of claims 7 to 12 is mounted.

**14.** A vehicle (100) on which the salt concentration measuring apparatus (1) according to any one of claims 7 to 12 is mounted, further comprising:

a scattering apparatus (102) for scattering an anti-freezing agent on a road on which the vehicle (100) is traveling; and
a scatter controller (103) for determining a scatter amount of the anti-freezing agent on the basis of a measurement result of said salt concentration measuring apparatus (1) and, on the basis of the determination, controlling operation of said scattering apparatus (102).

Fig. 1

Fig. 2

Fig. 3

Transmission light

M

22a

Total reflec-
tion light

Critical
angle
φ

27

28

26   25

Fig. 4

A

G

B

Fig. 5

Refractive index of sodium chloride solution
(from Physics and Chemistry Dictionary)

| Concentration (g/100 cm³) | 2 | 4 | 10 | 20 |
|---|---|---|---|---|
| Refractive index | 1.33667 | 1.34002 | 1.34963 | 1.36446 |

Fig. 6

Fig. 7

```
                    ┌──────────┐
                    │  Start   │
                    └────┬─────┘
                         │
                         ▼            ST1
                    ╱─────────╲
            YES    ╱  Water    ╲
         ┌────────╱  exists?    ╲
         │        ╲             ╱
         │         ╲───────────╱
         │              │ NO
         │              ▼
         │        ┌──────────────┐   ST2
         │        │ Measure speed │
         │        └──────┬───────┘
         │               │
         │               ▼
         │     ┌──────────────────┐  ST3
         │     │ Determine degree │
         │     │ of opening of    │
         │     │ valve of water   │
         │     │ spreader in      │
         │     │ accordance with  │
         │     │ speed            │
         │     └────────┬─────────┘
         │              │
         │              ▼
         │     ┌──────────────────┐  ST4
         │     │ Measure road     │
         │     │ surface          │
         │     │ temperature      │
         │     └────────┬─────────┘
         │              │
         │              ▼          ST5
         │         ╱─────────╲
         │        ╱  2 °C or  ╲      NO      ┌──────────────────┐  ST7
         │        ╲  less?    ╱─────────────▶│ Connect nozzle   │
         │         ╲─────────╱               │ to water tank    │
         │              │ YES                │ side             │
         │              ▼          ST6       └────────┬─────────┘
         │     ┌──────────────────┐                   │
         │     │ Connect nozzle   │                   │
         │     │ to salt water    │                   │
         │     │ tank side        │                   │
         │     └────────┬─────────┘                   │
         │              │◀──────────────────────────── ┘
         │              ▼
         │     ┌──────────────┐   ST8
         │     │ Spread water │
         │     └──────┬───────┘
         │            │
         └───────────▶│
                      ▼
              ┌──────────────────┐  ST9
              │ Measure salt     │
              │ concentration    │
              └────────┬─────────┘
                       │
                       ▼
              ┌──────────────────┐  ST10
              │ Determine scatter│
              │ amount of anti-  │
              │ freezing agent   │
              └────────┬─────────┘
                       │
                       ▼          ST11
                  ╱─────────╲
         NO      ╱ Scattering ╲
     ┌──────────╱  performed? ╲
     │          ╲             ╱
     │           ╲───────────╱
     │                │ YES
     │                ▼
     │       ┌──────────────────┐  ST12
     │       │ Output scatter   │
     │       │ amount to scatter│
     │       │ controller       │
     │       └────────┬─────────┘
     │                │
     └───────────────▶│
                      ▼
                ┌──────────┐
                │   End    │
                └──────────┘
```

14

Fig. 8

**European Patent Office**

## EUROPEAN SEARCH REPORT

Application Number

EP 05 01 1655

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 30 19 341 A1 (BUDAN,GERHARD,DIPL.-CHEM) 26 November 1981 (1981-11-26) * page 9; figure 2 * | 1-14 | G01N1/02 E01H10/00 |
| X | DE 31 20 362 A1 (BUDAN, GERHARD, DIPL.-CHEM., 3500 KASSEL, DE) 30 December 1982 (1982-12-30) * figures 2,3 * | 1-14 | |
| A | DE 42 42 215 C1 (FRAUNHOFER-GESELLSCHAFT ZUR FOERDERUNG DER ANGEWANDTEN FORSCHUNG E.V.,) 11 May 1994 (1994-05-11) * figure 1 * | 1-14 | |
| D,A | PATENT ABSTRACTS OF JAPAN vol. 2000, no. 09, 13 October 2000 (2000-10-13) & JP 2000 155096 A (OMRON CORP), 6 June 2000 (2000-06-06) * abstract; figures 2,15-17 * | 1-14 | |
| A | DE 26 48 906 A1 (BRAUN,OTTO P.,ING; BRAUN, OTTO PETER, ING., 7141 FREIBERG) 3 May 1978 (1978-05-03) * pages 4-5 * | 1-14 | TECHNICAL FIELDS SEARCHED (Int.Cl.7)<br><br>E01H<br>G01N<br>G08B<br>C09K<br>B05B |
| A | FR 2 423 833 A (BRAUN OTTO) 16 November 1979 (1979-11-16) * figures 1,2 * | 1-14 | |
| A | DE 31 43 316 C1 (KUEPPER, WILLY, 7715 BRAEUNLINGEN, DE) 21 April 1983 (1983-04-21) * figure 1 * | 1-14 | |
| | -/-- | | |

The present search report has been drawn up for all claims

| Place of search | Date of completion of the search | Examiner |
|---|---|---|
| Munich | 26 September 2005 | Mason, W |

EPO FORM 1503 03.82 (P04C01)

**European Patent Office**

## EUROPEAN SEARCH REPORT

Application Number

EP 05 01 1655

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN<br>vol. 1999, no. 04,<br>30 April 1999 (1999-04-30)<br>& JP 11 014515 A (TAKUWA:KK),<br>22 January 1999 (1999-01-22)<br>* abstract; figure 3 *<br>----- | 1-14 | |
| | | | **TECHNICAL FIELDS SEARCHED** (Int.Cl.7) |

The present search report has been drawn up for all claims

| Place of search | Date of completion of the search | Examiner |
|---|---|---|
| Munich | 26 September 2005 | Mason, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 01 1655

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2005

| Patent document cited in search report | | Publication date | Patent family member(s) | | Publication date |
|---|---|---|---|---|---|
| DE 3019341 | A1 | 26-11-1981 | NONE | | |
| DE 3120362 | A1 | 30-12-1982 | NONE | | |
| DE 4242215 | C1 | 11-05-1994 | NONE | | |
| JP 2000155096 | A | 06-06-2000 | NONE | | |
| DE 2648906 | A1 | 03-05-1978 | NONE | | |
| FR 2423833 | A | 16-11-1979 | NONE | | |
| DE 3143316 | C1 | 21-04-1983 | AT | 384450 B | 10-11-1987 |
| | | | AT | 382582 A | 15-04-1987 |
| | | | CH | 657883 A5 | 30-09-1986 |
| | | | NL | 8203891 A | 16-05-1983 |
| JP 11014515 | A | 22-01-1999 | JP | 3193324 B2 | 30-07-2001 |

EPO FORM P0459

For more details about this annex : see Official Journal of the European Patent Office, No. 12/82